# EUROPÄISCHE PATENTSCHRIFT

(11) **EP 1 126 686 B1**
(45) Veröffentlichungstag und Bekanntmachung des Hinweises auf die Patenterteilung: **09.11.2005**
(21) Anmeldenummer: 00127226.9
(22) Anmeldetag: 15.12.2000
(51) Int. Cl.: H04M 3/487, H04M 3/493

(54) **Verfahren zur interaktiven Werbung in sprachgestützten Telekommunikationsverbindungen**
Method for interactive advertisement in voice supported telecommunication connections
Procédé de publicité interactive dans de liaisons de télécommunication vocales

(30) Priorität: 18.02.2000 DE 10008782
(43) Veröffentlichungstag der Anmeldung: 22.08.2001
(73) Patentinhaber: Deutsche Telekom AG, 53113 Bonn (DE); Infoman AG, 70567 Stuttgart (DE)
(72) Erfinder: Parus, Hardy, 12524 Berlin (DE); Wetzel, Peter, 71144 Steinenbronn (DE)

(56) Entgegenhaltungen:
- EP-A- 0 924 916
- WO-A-98/34392
- US-A- 5 448 625
- US-A- 5 752 186
- US-A- 5 852 775

## Beschreibung

Das erfindungsgemäße Verfahren ist auf die Werbung in sprachgestützten Kommunikationsverbindungen, insbesondere während eines Telefongespräches, ausgerichtet

Aus US-A 5,448,625 ist ein Verfahren und eine Vorrichtung für die Leitweglenkung eines Anrufs von einem Anrufer zu einem gerufenen Teilnehmer bekannt. Bei dieser Lösung wird mit Hilfe eines Werbe-Services in ein bestehendes Telefongespräch Werbung eingeblendet. Die Zeitdauer des Telefongespräches lässt sich damit in zwei unterschiedliche Zeitabschnitte einteilen. Ein Zeitabschnitt dient der eigentlichen Kommunikation zwischen den Gesprächsteilnehmern. Im zweiten Zeitabschnitt wird Werbung in plakativer Form vor-, ab- oder eingespielt. Um den Kunden einen Anreiz zur Nutzung einer solchen Gesprächsverbindung, die stellenweise von Werbung unterbrochen wird, zu geben, übernimmt zumeist der Betreiber des Werbe-Services das für die Gesprächsverbindung anfallende Verbindungsentgelt, beispielsweise mit Hilfe einer gebührenfreien Rufnummer.

Bei dieser Lösung wird die während des Gesprächs eingeblendete Werbung rein plakativ präsentiert. Es besteht während der in das Gespräch eingeblendeten Werbung für den Teilnehmer weder die Möglichkeit mit dem Gesprächspartner zu kommunizieren noch eine Möglichkeit, interaktiv auf die Werbung zu reagieren.
Eine weitere bekannte Lösung wird in US-A 5,752,186 beschrieben. Bei dieser Lösung handelt es sich um ein zweitgeteiltes Werbesystem, welches aus dem Teilsystem für die eigentliche Werbung und dem Teilsystem für den Zugang zu den die eigentliche Werbung ergänzenden Informationen besteht. Im Rahmen des ersten Teilsystems wird die eigentliche Werbebotschaft über Plakat, Radio oder Fernsehen verbreitet, wobei jeder Werbebotschaft eine Adresse, wie beispielsweise eine Zugangskenazahl oder ein Identifizierungscode zugeordnet ist, die sich der Kunde aufschreiben oder merken muss. Falls gewünscht, kann der Kunde zu einem späteren Zeitpunkt über das zweite Teilsystem ergänzende Informationen zu der betreffenden Werbebotschaft abfragen. Die Abfrage von zusätzlichen Informationen erfolgt vorzugsweise über ein Mobiltelefon unter Angabe der zugeordneten Zugangskennzahl bzw. des Zugangscodes, die der Kunde vom ersten Teilsystem erhalten hat.
Bei dieser Lösung erfolgt der Zugang zu den die eigentliche Werbebotschaft ergänzenden Informationen sowohl zeitlich unabhängig von der Kenntnisnahme der eigentlichen Werbebotschaft, als auch über andere Medien, wobei der Kunde erstmalig bei Zugriff auf das zweite Teilsystem Zugriff auf das eigentliche Dialogsystem erhält.

Die technische Aufgabe der Erfindung besteht darin, dem Kunden eine Möglichkeit zu bieten, kurzfristig auf ein in eine bestehende Gesprächsverbindung eingeblendetes Werbeangebot zu reagieren.

Während einer zwischen einem Kunden A und einem Gesprächspartner B bestehenden Gesprächsverbindung werden von einem in die Gesprächsverbindung eingeschleiften automatischen Werbedialogsystem C gezielt Werbeinformationen in die Gesprächsverbindung eingeblendet.

Die einzelnen Werbeinformationen sind dabei so ausgebildet, dass sie dem Kunden A die Möglichkeit bieten, auf die eingeblendeten Werbeangebote sofort zu reagieren. Im automatischen Werbedialogsystem C werden die Werbeanzeigen und die zu den Werbeanzeigen möglichen Aktionen verwaltet.
Erfindungsgemäß werden dem Kunden in der in das Gespräch eingeblendeten Werbeanzeige Aktivierungsmöglichkeiten aufgezeigt, mit denen er in Interaktion mit dem Werbedialogsystem C sofort auf eine Werbeanzeige reagieren kann.

Die Interaktion des Kunden mit dem Werbedialogsystem C kann beispielsweise über Spracheingabe oder über Tastenbetätigung erfolgen.
Durch Spracheingabe eines Schlüsselwortes, oder durch Tastenbetätigung kann der Kunden beispielsweise folgende Aktionen des Werbedialogsystems C auslösen:
- Herstellung einer Gesprächsverbindung zu einer Kontaktadresse des Werbenden,
- Einblendung von zusätzlichen Informationen zu Werbeanzeigen, wie beispielsweise weiterführenden Texten zu der betreffenden Werbeanzeige,
- Verbindung zu einem Telefon-Mehrwertdienst,
- Erfassung von Rückrufinformationen,
- kontexbezogene Interaktionen im Dialog mit dem Kunden.

Für die Einblendung der Werbeinformation vom Werbedialogsystem C in die Gesprächsverbindung zwischen dem Kunden A und dem Gesprächspartner B werden zwei Möglichkeiten gesehen. Die erste Möglichkeit besteht darin, unabhängig vom Gesprächsverlauf, in definierten Zeitabständen, Werbeinformationen in das Gespräch einzublenden. Bei dieser Variante werden die einzelnen Werbeinformationen vom Werbedialogsystem C automatisch auf der Basis einer Zeitsteuerung in die Gesprächsverbindung eingeblendet.
Die zweite Möglichkeit beinhaltet die gezielte gesprächsorientierte Einblendung von Werbeinformatinen. Bei dieser Variante besteht zwischen dem Teilnehmer B und dem Werbedialogsystem C eine Steuerverbindung. Der Zeitpunkt der Einblendung von Werbeanzeigen wird dabei vom Gesprächspartner B aus gesteuert. Bei dieser Variante ist es möglich, Werbeinformationen gezielt an geeigneten Stellen in die bestehende Gesprächsverbindung einzublenden.

Das erfindungsgemäße Verfahren wird anhand eines Ausführungsbeispiels näher erläutert.

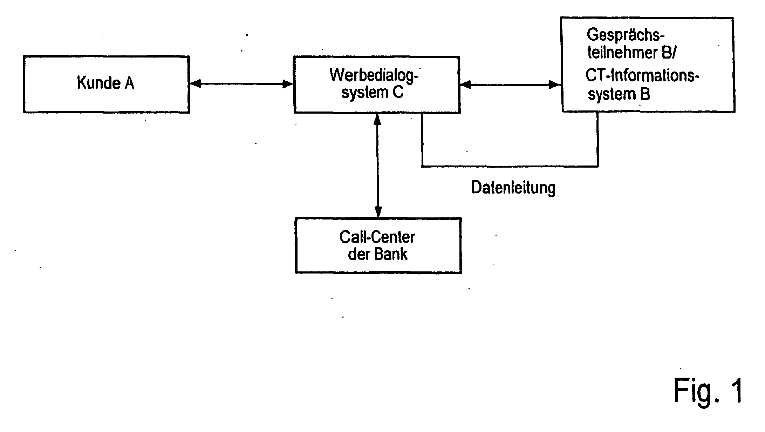

Fig. 1 zeigt das Ablaufschema des Verfahrens

Bei dem Ausführungsbeispiel nach Fig. 1 ist der Gesprächspartner B ein Computer-Telefonie-Informationssystem (CT-Informationssystem B), welches als Dienstleistungsangebot den Zugriff auf Informationsdatenbanken für PKW anbietet. Auf eine Anfrage des Kunden A, beispielsweise nach technischen Angaben zu einem bestimmten KFZ-Typ, wird vom CT-Informationssystem B die gewünschte Information über die dem CT-Informationssystem B zugeordneten Informationsdatenbanken ermittelt und über die bestehende Gesprächsverbindung an den Kunden A in Form einer Sprachinformation ausgegeben. Durch das CT-Informationssystem B wird diese Sprachinformation automatisch an einer geeigneten Stelle unterbrochen. Gleichzeitig wird das in das Gespräch eingeschleifte Werbedialogsystem C vom CT-Informationssystem B angesteuert und veranlasst, eine Werbeinformation in das Gespräch einzublenden. Die Ansteuerung erfolgt im Ausführungsbeispiel nach Fig. 1 über eine Datenleitung zwischen dem CT-Informationssystem B und dem Werbedialogsystem C. Bei der Steuerung über eine Datenleitung wird vom Gesprächsteilnehmer (B) ein Signal erzeugt und über die zwischen dem Gesprächsteilnehmer (B) und dem Werbedialogsystem (C) geschaltete Datenleitung zum Sprachdialogsystem (C) übertragen. Das übertragene Signal löst im Werbedialogsystem (C) die Einblendung einer Werbeinformation in die bestehende Gesprächsverbindung aus. Nach Beendigung der Werbeinformation wird im Werbedialogsystem (C) ein Gegensignal erzeugt und über die Datenleitung zum Gesprächsteilnehmer (B) übertragen. Das Gegensignal zeigt beim Gesprächsteilnehmer (B) das Ende der Werbeinformation an. Das ursprüngliche Gespräch zwischen dem Kunden A und dem CT-Informationssystem B kann fortgesetzt werden.

Möglich ist es auch, dass die Steuerung für die Einblendung einer Werbeinformation vom Gesprächsteilnehmer B über die zum Kunden A bestehende Gesprächsverbindung erfolgt. Bei dieser Lösung wird vom CT-Informationssystem B ein Signal erzeugt und ausgegeben. Das Signal wird vom Werbedialogsystem C erkannt und veranlasst das Werbedialogsystem C zur Einblendung einer Werbeinformation in die bestehende Gesprächsverbindung. Nach Beendigung der Werbeinformation wird vom Werbedialogsystem C ein Gegensignal erzeugt und ausgegeben. Das Gegensignal wird vom CT-Informationssystem B erkannt und zeigt dem CT-Informationssystem B das Ende der Werbeinformation an. Danach kann das ursprüngliche Gespräch zwischen dem Kunden A und dem CT-Informationssystem B fortgesetzt werden.
In diesem Zusammenhang bietet es sich an, dass durch das CT-Informationssystem (B) Informationen über den Teilnehmer (A) und/oder Informationen über den Gesprächskontex zwischen dem CT-Informationssystem B und dem Teilnehmer A erfasst und ebenfalls zum Werbedialogsystem (C) übertragen werden. Diese zusätzlichen Informationen werden im Werbedialogsystem C zur zielgruppenspezifischen Auswahl der in das Gespräch einzublendenden Werbeinformation/en verwendet. Das geschieht anhand einer im Werbedialogsystem C angeordneten Auswertelogik.

Da es sich bei der vom Kunden A abgefragten Information um die Information zu einem KFZ-Typ handelt, bietet es sich an, beispielsweise Werbeinformationen einzublenden, die sich auf diesen speziellen KFZ-Typ beziehen. Die Werbeinformation kann beispielsweise als Finanzierungsangebot einer Bank für einen Neuwagen ausgebildet sein.
In jeder Werbeinformation ist mindestens ein Schlüsselwort und/oder eine Information über eine zu betätigende Taste des Telekommunikationsendgerätes des Kunden A enthalten. Mittels des Schlüsselwortes oder der Tastenbetätigung kann der Kunde A auf die Werbeanzeige reagieren, da dem Schlüsselwort oder der Tastenbetätigung Aktionen zugeordnet sind, die im Zusammenhang mit der betreffenden Werbeinformation stehen. Gibt der Kunde A während oder nach einer Werbeinformation das mit der Werbeinformation übermittelte Schlüsselwort als Sprachsignal ein, so wird das eingegebene Schlüsselwort mit den im Werbedialogsystem C zu den einzelnen Werbeangeboten gespeicherten Schlüsselworten verglichen. Bei Übereinstimmung mit einem gespeicherten Schlüsselwort wird vom Werbedialogsystem C automatisch die zu dem betreffenden Schlüsselwort gespeicherte/n Aktion/en gestartet.
Im Ausführungsbeispiel besteht die Aktion darin, dass vom Werbedialogsystem C für den Kunden automatisch eine Verbindung zu einem Call-Center der Bank hergestellt wird, an deren Finanzierungsangebot der Kunde A interessiert ist. Der Kunde A kann nach Herstellung der Verbindung zum Call-Center der Bank seinen Dienstleistungswunsch hinterfragen und bei Interesse auch auf ein Finanzierungsangebot eingehen. Nach Beenden des Gespräches mit dem Call-Center der Bank kann der Kunde A das Gespräch mit dem CT-Informationssystem B fortsetzen und weitere Informationen abfragen oder das Gespräch beenden.
Das erfindungsgemäße Verfahren ist insbesondere für Dienstleister interessant, die als Dienstleistung ein datengestütztes Informationssystem mit Informationen zu Produkten anbieten. Mittels der erfindungsgemäßen Lösung ist es möglich, Produktinformationen gezielt mit produktbegleitenden Werbeinformationen für den Kunden zu unterlegen. Der Kunde ist dadurch in der Lage, sofort und ohne großen Aufwand auf Werbeinformationen zu ihn interessierenden Sachverhalten zu reagieren. Für die Dienstleister, die den Informationsdienst betreiben, bietet sich eine Möglichkeit der Refinanzierung ihrer Dienstleistungen über Werbeeinnahmen. Für die werbende Firma bietet die Erfindung eine gute Möglichkeit für eine zielgruppenorientierte individuelle Werbung.
Durch die logische Trennung zwischen dem CT-Informationssystem B und dem Werbedialogsystem C bietet es sich insbesondere auch für die Betreiber von Telekommunikationsnetzen an, das erfindungsgemäße Verfahren selber zentral zu betreiben und es geeigneten Netzteilnehmern, wie beispielsweise Informationsdiensten, Mehrwertdiensten und Werbetreibenden als Dienstleistung zur Nutzung anzubieten.

## Patentansprüche

1. Verfahren zur Werbung in sprachgestützten Telekommunikationsverbindungen, bei dem während einer Gesprächsverbindung Werbeinformationen eingeblendet werden, **dadurch gekennzeichnet, dass** von einem Werbedialogsystem (C), welches Werbeinformationen und Aktionen zu Werbeinformationen verwaltet und in eine bestehende Gesprächsverbindung eingeschleift ist, Werbeinformationen in die bestehende Gesprächsverbindung eingespielt werden, dass jeder Werbeinformation mindestens ein Hinweis zu einer in Verbindung mit der Werbeinformation möglichen Aktion und eine Startanweisung zu dieser Aktion zugeordnet ist, dass der Kunde (A) durch Auslösen der Startanweisung die im Werbedialogsystem (C) zu der betreffenden Werbeinformation gespeicherte/n Aktion/en aktiviert, und dass dem Kunden (A) die mit der/den Aktion/en verbundene/n Dienstleistung/en vom Werbedialogsystem (C) automatisch bereitgestellt wird/werden.

2. Verfahren nach Anspruch 1, **dadurch gekennzeichnet, dass** vom Werbedialogsystem (C) zu der eingespielten Werbeinformation als Startanweisung für die im Rahmen der Werbeinformation angebotene Aktion eine Information über ein Schlüsselwort bzw. einen Schlüsselsatz an den Kunden A ausgegeben wird, und dass nach Aktivierung des Schlüsselwortes bzw. des Schlüsselsatzes durch den Kunden A die betreffende Aktion vom Werbedialogsystem (C) für den Kunden (A) ausgeführt wird.

3. Verfahren nach Anspruch 1, **dadurch gekennzeichnet, dass** zu der eingespielten Werbeinformation als Startanweisung für die im Rahmen der Werbeinformation angebotene Aktion die Information über eine Taste bzw. Tastenkombination des Telefons an den Kunden (A) ausgegeben wird, dass nach Betätigung der Taste/Tastenkombination durch den Kunden (A) die betreffende Aktion vom Werbedialogsystem (C) für den Kunden (A) ausgeführt wird.

4. Verfahren nach Anspruch 1, 2 und 3, **dadurch gekennzeichnet, dass** die Einblendung der einzelnen Werbeinformationen in die betreffende Gesprächsverbindung durch das Werbedialogsystem (C) zeitgesteuert in vorher festgelegten regelmäßigen Abständen erfolgt.

5. Verfahren nach Anspruch 1, 2 und 3, **dadurch gekennzeichnet, dass** die Einblendung einer Werbeinformation vom Gesprächsteilnehmer (B) gesteuert wird, wobei vom Gesprächsteilnehmer (B) ein Signal erzeugt und über eine zwischen dem Gesprächsteilnehmer (B) und dem Werbedialogsystem (C) geschaltete Datenverbindung zum Werbedialogsystem (C) übertragen wird, dass das übertragene Signal im Werbedialogsystem (C) die Einblendung einer Werbeinformation in die bestehende Gesprächsverbindung auslöst, und dass nach Beendigung der Werbeinformation vom Werbedialogsystem (C) ein Gegensignal erzeugt und über die Datenverbindung zum Gesprächsteilnehmer (B) übertragen wird, welches beim Gesprächsteilnehmer (B) das Ende der Werbeinformation signalisiert.

6. Verfahren nach Anspruch 1, 2 und 3, **dadurch gekennzeichnet, dass** die Einblendung einer Werbeinformation vom Gesprächsteilnehmer (B) gesteuert wird, wobei vom Gesprächsteilnehmer (B) ein Signal erzeugt und in die bestehende Gesprächsverbindung eingeblendet wird, dass das in die Gesprächsverbindung eingeblendete Signal vom Werbedialogsystem (C) erfasst wird und die Einblendung einer Werbeinformation in die bestehende Gesprächsverbindung auslöst, und dass nach Beendigung der Werbeinformation vom Werbedialogsystem (C) ein Gegensignal erzeugt und in die bestehende Gesprächsverbindung eingeblendet wird, welches beim Gesprächsteilnehmer (B) das Ende der Werbeinformation signalisiert.

7. Verfahren nach Anspruch 1, 5 und 6, **dadurch gekennzeichnet, dass** vom Gesprächsteilnehmer (B) zusätzlich Informationen über den Teilnehmer (A) und/oder Informationen über den Gesprächskontex zum Werbedialogsystem (C) übertragen werden.

8. Verfahren nach Anspruch 1, 5, 6 und 7, **dadurch gekennzeichnet, dass** die zusätzlich übertragenen Informationen über den Teilnehmer (A) und über den Gesprächskontex im Werbedialogsystem (C) zur zielgruppenspezifischen Auswahl der in das Gespräch einzublendenden Werbeinformation/en verwendet werden.

## Claims

1. Method for advertising in voice-operated telecommunications connections wherein advertising information is inserted during a call, **characterized in that** advertising information is imported into an existing call by an interactive advertising system (C) connected to the existing call, said system administering advertising information and actions concerning advertising information, **in that** each item of advertising information is associated with at least one reference to a possible action in connection with the advertising information and with a start command for this action, **in that** the customer (A) triggers the start command to activate the action(s) stored in the interactive advertising system (C) for the advertising information in question, and **in that** the interactive advertising system (C) automatically provides to the customer (A) the service(s) associated with the action(s).

2. Method according to claim 1, **characterized in that** information concerning a keyword or a key phrase relating to the imported advertising information is output to the customer (A) by the interactive advertising system (C) as a start command for the action offered within the framework of the advertising information, and **in that** the action in question is performed for the customer (A) by the interactive advertising system (C) after the customer (A) has activated the keyword or key phrase.

3. Method according to claim 1, **characterized in that** the information concerning a telephone key or combination of telephone keys relating to the imported advertising information is output to the customer (A) as a start command for the action offered within the framework of the advertising information, and **in that** the action in question is performed for the customer (A) by the interactive advertising system (C) after the customer (A) has pressed the key/key combination.

4. Method according to claims 1, 2, and 3, **characterized in that** the insertion of the specific advertising information into the call in question is carried out by the interactive advertising system (C) in a time-controlled manner at previously defined, regular intervals.

5. Method according to claims 1, 2, and 3, **characterized in that** the insertion of an item of advertising information is driven by the call participant (B), a signal being generated by the call participant (B) and transmitted to the interactive advertising system (C) over a data circuit connected between the call participant (B) and the interactive advertising system (C), **in that** the transmitted signal triggers in the interactive advertising system (C) the insertion of an item of advertising information into the existing call, and **in that** a reply signal is generated by the interactive advertising system (C) upon termination of the advertising information and transmitted over the data circuit to the call participant (B), signaling the end of the advertising information to the call participant (B).

6. Method according to claims 1, 2, and 3, **characterized in that** the insertion of an item of advertising information is driven by the call participant (B), a signal being generated by the call participant (B) and inserted into the existing call, **in that** the signal inserted into the call is detected by the interactive advertising system (C) and triggers the insertion of an item of advertising information into the existing call, and **in that** a reply signal is generated by the interactive advertising system (C) upon termination of the advertising information and inserted into the existing call, signaling the end of the advertising information to the call participant (B).

7. Method according to claims 1, 5, and 6, **characterized in that** additional information about the participant (A) and/or information about the call context is transmitted by the call participant (B) to the interactive advertising system (C).

8. Method according to claims 1, 5, 6, and 7, **characterized in that** the additionally transmitted information about the participant (A) and about the call context is used in the interactive advertising system (C) for target-group-specific selection of the advertising information item(s) to be inserted into the call.

## Revendications

1. Procédé destiné à la publicité dans les télécommunications vocales, lors duquel des informations publicitaires sont insérées durant une communication,
**caractérisé en ce qu'**un système de dialogue publicitaire (C), gérant les informations publicitaires et les actions par rapport à ces informations et étant intercalé dans une communication existante, insère des informations publicitaires dans une communication existante, qu'à chaque information publicitaire sont attribués au moins un indice en rapport avec l'action possible de cette information ainsi qu'une instruction de départ quant à cette action, que le client (A) active, en déclenchant l'instruction de départ, l'/les action(s) mémorisée(s) dans le système de dialogue publicitaire (C) et se rapportant à l'information publicitaire concernée, et que le(s) service(s) lié(s) à l'/aux action(s) sont automatiquement mis à la disposition du client (A) par le système de dialogue publicitaire (C).

2. Procédé selon la revendication 1, **caractérisé en ce que,** outre l'information publicitaire insérée, une information servant d'instruction de départ pour l'action proposée dans le cadre de l'information publicitaire est émise au client A via un mot de passe ou une phrase de passe, et qu'après l'activation du mot de passe ou de la phrase de passe par le client A, l'action correspondante est exécutée pour le client (A) par le système de dialogue publicitaire (C).

3. Procédé selon la revendication 1, **caractérisé en ce qu'**outre l'information publicitaire insérée, une information sur une touche ou une combinaison de touches servant d'instruction de départ pour l'action proposée dans le cadre de l'information publicitaire est émise au client (A), qu'après actionnement par le client (A) de la touche/de la combinaison de touches, l'action correspondante est exécutée pour le client (A) par le système de dialogue publicitaire (C).

4. Procédé selon les revendications 1, 2 et 3, **caractérisé en ce que** l'insertion des différentes informations publicitaires dans la communication concernée par le système de dialogue publicitaire (C) a lieu à des intervalles réguliers prédéfinis commandés par le temps.

5. Procédé selon les revendications 1, 2 et 3, **caractérisé en ce que** l'insertion d'une information publicitaire est commandée par le correspondant (B), ce correspondant (B) générant un signal qui est transmis au système de dialogue publicitaire via un circuit de données établi entre le correspondant (B) et le système de dialogue publicitaire (C), que le signal transmis déclenche dans le système de dialogue publicitaire (C) l'insertion d'une information publicitaire dans la communication existante, et qu'après la fin de l'information publicitaire, un contre-signal est généré par le système de dialogue publicitaire (C) et transmis au correspondant (B) via le circuit de données, signalant ainsi la fin de l'information publicitaire au correspondant (B).

6. Procédé selon les revendications 1, 2 et 3, **caractérisé en ce que** l'insertion d'une information publicitaire est commandée par le correspondant (B), ce correspondant (B) générant un signal qui est inséré dans la communication existante, que le signal inséré dans la communication est saisi par le système de dialogue publicitaire (C) et déclenche l'insertion d'une information publicitaire dans la communication existante, et qu'après la fin de l'information publicitaire, un contre-signal est généré par le système de dialogue publicitaire (C) et inséré dans la communication existante, signalant ainsi la fin de l'information publicitaire au correspondant (B).

7. Procédé selon les revendications 1, 5 et 6, **caractérisé en ce que** des informations supplémentaires concernant le correspondant (A) et/ou des informations concernant le contexte de la conversation sont transmises au système de dialogue publicitaire (C) par le correspondant (B).

8. Procédé selon les revendications 1, 5, 6 et 7 **caractérisé en ce que** les informations transmises de manière supplémentaire concernant le correspondant (A) et le contexte de la conversation (C) sont utilisées dans le système de dialogue publicitaire (C) pour le choix des informations publicitaires à adresser à des cibles spécifiques et à insérer dans la communication.
